# EUROPEAN PATENT APPLICATION

(11) **EP 2 684 668 A1**
(43) Date of publication of application: **15.01.2014**
(21) Application number: 13175610.8
(22) Date of filing: 08.07.2013
(51) Int. Cl.: B29C 45/14, G06F 1/16, H01Q 1/24, H01Q 1/40, H04M 1/02

(54) **Injection-moulded product and a mould and a method for manufacturing the same**

(30) Priority: 13.07.2012 KR 20120076560
(71) Applicant: Samsung Electronics Co., Ltd., Gyeonggi-do 442- 742 (KR)
(72) Inventor: Kim, Sang-Hyeon, 442-742 Gyeonggi-do (KR); Lee, Su-Kyu, 442-742 Gyeonggi-do (KR)
(74) Representative: Gover, Richard Paul

(57) **Abstract**

An injection-moulded product comprising a reinforcement member, a heat resistant member and an injection-moulded member. The reinforcement member is formed with a through-hole. The heat-resistant member is attached to an outer surface of the reinforcement member to close an opening of the through-hole. The injection-moulded member comprises a synthetic resin that encloses at least part of the outer surface of the reinforcement member. A mould for manufacturing an injection-moulded product and a method of manufacturing an injection-moulded product are also disclosed.

## Description

### BACKGROUND OF THE INVENTION

### 1. Field of the Invention:

Certain embodiments of the present invention relates to an injection-moulded product. More particularly, certain embodiments of the present invention relates to an injection-moulded product which may be used as a case for a portable electronic device, such as a portable terminal.

### 2. Description of the Related Art:

In general, injection moulding is a method of moulding a synthetic resin into a desired shape by first fabricating a mould having a cavity with a shape corresponding to that of a desired injection-moulded product, injecting a molten synthetic resin into the cavity in the mould, and then cooling the synthetic resin in the cavity to be solidified and moulded to the desired shape. Injection moulding is widely used for fabricating various products including those having a simple shape, such as a kitchen container, to those having a complicated shape, such as a case for an electronic device such as a wired home telephone, an MP3 player, a mobile phone, or an electronic scheduler. The reason why injection moulding is widely used in spite of the high cost in fabricating a mould is because injection moulding is advantageous in mass-producing products with consistent quality after only a single mould is fabricated.

With the development of super-high speed wired/wireless Internet and mobile telecommunication services, the use of portable electronic devices, such as mobile phones, electronic schedulers, MP3 players, and portable multimedia reproducing devices, is increasingly popular. This in turn increases the number of products that are manufactured using injection moulding. In their initial stages, mobile communication services were limited to voice communication or short message transmission. However, various advanced functions, such as a multimedia service, a banking/security service, and Internet access, have been gradually integrated into a single mobile communication terminal. Accordingly, various efforts to miniaturize and slim down a portable terminal while providing a large screen suitable for the multimedia functions or the like are continuously made by expanding the display device of such a portable terminal and incorporating a touch screen function to the display device to replace a physical keypad.

In order to miniaturize and slim down a portable terminal, it is required to reduce the thickness of a case of the portable terminal. At the same time, the strength of the case itself should be ensured in order to secure a structural strength and impact resistance. An insert injection moulding process may be used in order to secure the strength of the case itself while reducing the thickness of the case. The insert injection moulding process injection-moulds a case in a state where a metallic reinforcement member is inserted into the mould.

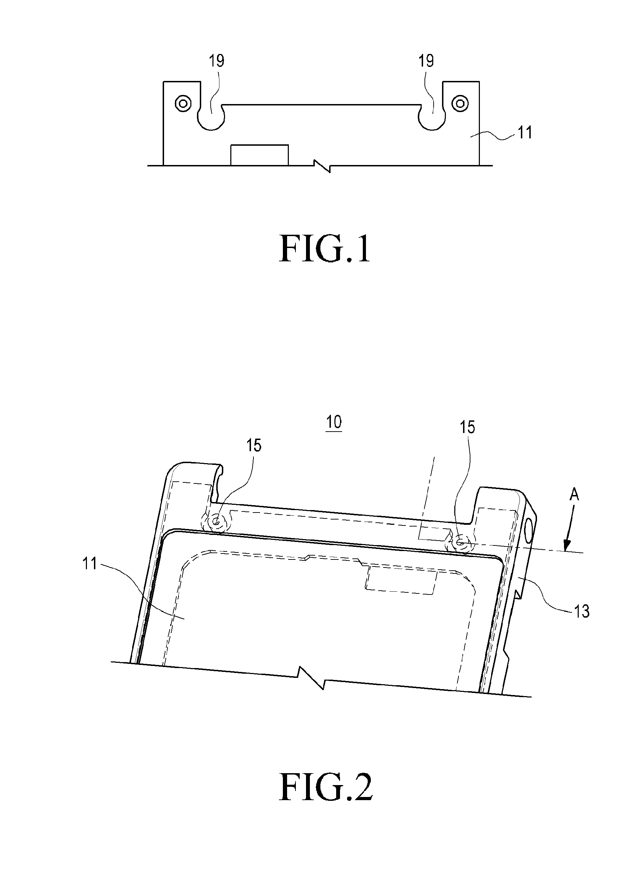

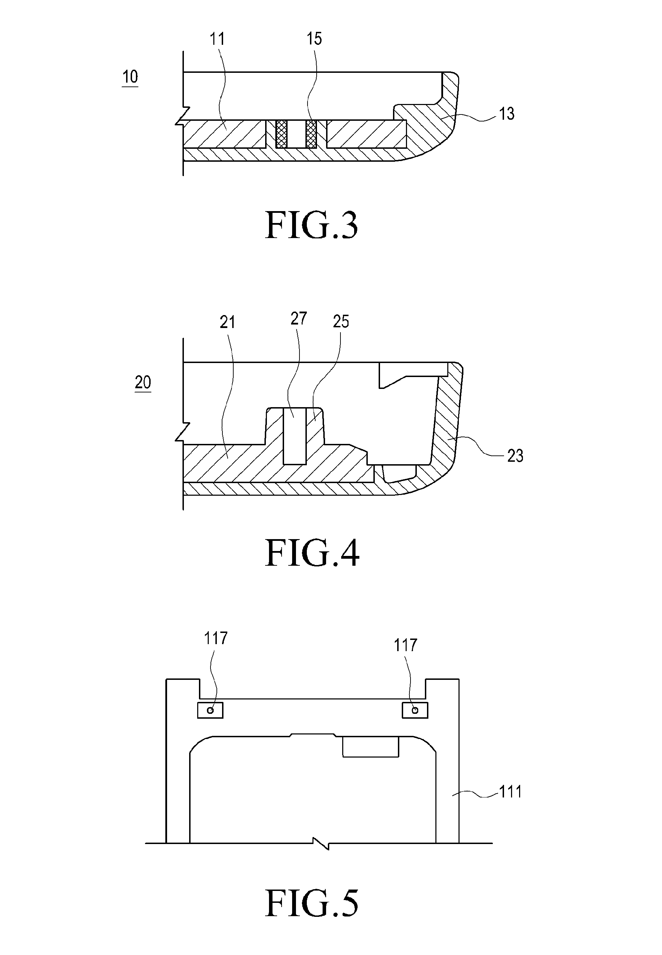

FIG. 1 is a top plan view illustrating a reinforcement member used for moulding a case for a portable terminal according to the related art. FIG. 2 is a perspective view illustrating an injection-moulded product which is moulded through an insert injection moulding using the reinforcement member depicted in FIG. 1 according to the related art. FIG. 3 is a partial cross-sectional view taken along a line indicated by arrow A of the injection-moulded product depicted in FIG. 2 according to the related art. FIG. 4 is a cross-sectional view illustrating a part of a modification of the injection-moulded product depicted in FIG. 2 according to the related art.

In more detail, FIGs. 1 to 4 are views for describing an injection-moulded product 10 or 20 including a reinforcement member 11 or 21, in which FIGs. 1 to 3 illustrate the injection-moulded product 10 provided with insert members 15 for providing fastening means which are disposed separately from the reinforcement member 11, and FIG. 4 illustrates the injection-moulded product 20 in which the reinforcement member 21 itself is provided with fastening means without disposing a separate insert member 15.

Referring to FIGs. 1 to 3, the insert member 15 of the injection-moulded product 10 provides means to couple the injection-moulded product 10 with a counterpart element, for example, a circuit board of a portable terminal, or to couple the injection-moulded product 10 with another injection-moulded product that is configured to be assembled with the first injection-moulded product 10 so as to complete a practical case for the portable terminal. The injection-moulded product 10 is completed as an injection-moulded member 13 is moulded in a state where the injection-moulded member 13 encloses a surface of the reinforcement member 11, usually the outer surface of the reinforcement member 11. The insert members 15 are formed with screw-threads on inner peripheral surfaces thereof, and accommodated in openings 19 formed in the reinforcement member 11, respectively. The insert members 15 are respectively arranged in the openings 19 in such a manner that a predetermined gap can be retained between the outer peripheral surface of each of the insert members 15 and the inner peripheral surface of each of the openings 19. As a molten synthetic resin is introduced into and solidified in the gaps between the outer peripheral surfaces of the insert members 15 and the inner peripheral surfaces of the openings 19, the insert members 15 can be rigidly fixed to the inj ection-moulded member 13

However, in the process of solidifying the synthetic resin introduced around the insert members 15 in order to fix the insert members 15, a poor moulding may occur due to contraction or the like at a portion with a different thickness, for example, at the synthetic resin portions introduced around the insert members 15 depicted in FIG. 3. Such a poor moulding is frequently caused when a through-hole is formed in a reinforcement member in order to mount another element, for example, an embedded antenna.

In order to address such a poor moulding problem, it has been proposed to provide fastening means by processing a fastening member 25 having a screw-hole 27 on a side of the reinforcement member 21 as illustrated in FIG. 4 in order to make the thickness of the injection-moulded product 23 on the outside of the reinforcement member 21 uniform. However, the fastening member 25 protrudes from the inner surface of the reinforcement member 21 by about 1.6 mm, which presents an obstacle in reducing the thickness of the injection-moulded product 20 and consequently the thickness of the portable terminal.

Therefore, a need exists for an injection-moulded product which is structurally strong and impact resistant by being moulded in such a manner that the injection-moulded product includes a reinforcement member while suppressing poor moulding.

The above information is presented as background information only to assist with an understanding of the present disclosure. No determination has been made, and no assertion is made, as to whether any of the above might be applicable as prior art with regard to the present invention.

### SUMMARY OF THE INVENTION

It is an aim of certain embodiments of the present invention to address at least partly, at least one of the above-mentioned problems and/or disadvantages and to provide at least one of the advantages described below.

Accordingly, an aim of certain embodiments of the present invention is to provide an injection-moulded product which secures a structural strength and impact resistance by being moulded in such a manner that the injection-moulded product includes a reinforcement member while suppressing a poor moulding, and a mould for fabricating the same.

Another aim of certain embodiments of the present invention is to provide an injection-moulded product having a thickness that may be easily reduced and that is strong by being provided with a reinforcement member and fastening means, and a mould for fabricating the same.

Still another aim of certain embodiments of the present invention is to provide an injection-moulded product configured such that hardware, such as an embedded antenna, can be arranged therein, and a mould for fabricating the same.

In accordance with a first aspect of the present invention, an injection-moulded product is provided. The injection-moulded product includes a reinforcement member formed with a through-hole; a heat-resistant member attached to an outer surface of the reinforcement member to close an opening of the through-hole; and an injection-moulded member comprising a synthetic resin that encloses at least part of the outer surface of the reinforcement member.

In accordance with a second aspect of the present invention, a mould configured to fabricate an injection-moulded product with the above-mentioned configuration is provided. The mould includes a first mould part arranged to mount a reinforcement member formed with a through-hole; and a second mould part arranged to mate with the first mould part to define a moulding cavity surrounding at least part of the reinforcement member; wherein the first mould part comprises a support stud protruding from an inner surface of the first mould part and arranged to be positioned within a through-hole of a reinforcement member, and wherein the support stud is arranged to support the heat-resistant member such that the heat-resistant member is attached to an outer surface of the reinforcement member to close an opening of the through-hole; and wherein the moulding cavity is arranged to receive a molten resin to form an injection-moulded member that encloses the outer surface of the reinforcement member.

In accordance with a third aspect of the present invention, a method of manufacturing an injection-moulded product is provided. The method comprises mounting a reinforcement member upon a first mould part such that a support stud protruding from an inner surface of the first mould part is positioned within a through-hole of the reinforcement member; supporting a heat-resistant member upon the support stud such that the heat-resistant member is attached to an outer surface of the reinforcement member to close an opening of the through-hole; mating a second mould part with the first mould part to define a moulding cavity surrounding at least part of the reinforcement member; and introducing a molten resin into the moulding cavity to form an injection-moulded member that encloses the outer surface of the reinforcement member.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features, and advantages of certain exemplary embodiments of the present invention will be more apparent from the following description taken in conjunction with the accompanying drawings, in which:
FIG. 1 is a top plan view illustrating a reinforcement member used for moulding a case for a portable terminal according to the related art;
FIG. 2 is a perspective view illustrating an injection-moulded product which is moulded through a dual injection moulding using the reinforcement member depicted in FIG. 1 according to the related art;
FIG. 3 is a partial cross-sectional view taken along a line indicated by arrow A of the injection-moulded product depicted in FIG. 2 according to the related art;
FIG. 4 is a cross-sectional view illustrating a part of a modification of the injection-moulded product depicted in FIG. 2 according to the related art;
FIG. 5 is a top plan view illustrating a reinforcement member for an injection-moulded product according to an exemplary embodiment of the present invention;
FIG. 6 is a perspective view illustrating an aspect in which heat resist members are coupled to the reinforcement member depicted in FIG. 5 according to an exemplary embodiment of the present invention;
FIG. 7 is a perspective view illustrating a part of an injection-moulded product according to an exemplary embodiment of the present invention;
FIG. 8 is a partial cross-sectional view taken along a line indicated by arrow B of the injection-moulded product depicted in FIG. 7 according to an exemplary embodiment of the present invention;
FIG. 9 is a schematic cross-sectional view illustrating an injection-moulded product according to an exemplary embodiment of the present invention;
FIG. 10 is a schematic view illustrating a mould for fabricating the injection-moulded product depicted in FIG. 5 according to an exemplary embodiment of the present invention;
FIG. 11 is a view for describing a reinforcement member while being introduced into the mould depicted in FIG. 10 according to an exemplary embodiment of the present invention; and
FIG. 12 is a schematic cross-sectional view illustrating the reinforcement member after having been introduced into the mould depicted in FIG. 10 according to an exemplary embodiment of the present invention.

Throughout the drawings, it should be noted that like reference numbers are used to depict the same or similar elements, features, and structures.

### DETAILED DESCRIPTION OF EXEMPLARY EMBODIMENTS

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope of the invention as defined by the appended claims. In addition, descriptions of well-known functions and constructions may be omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention is provided for illustration purpose only and not for the purpose of limiting the scope of the invention as defined by the appended claims.

It is to be understood that the singular forms "a," "an," and "the" include plural referents unless the context clearly dictates otherwise. Thus, for example, reference to "a component surface" includes reference to one or more of such surfaces.

Throughout the description and claims of this specification, the words "comprise" and "contain" and variations of the words, for example "comprising" and "comprises", means "including but not limited to", and is not intended to (and does not) exclude other components, integers or steps.

Features, integers or characteristics described in conjunction with a particular aspect, embodiment or example of the invention are to be understood to be applicable to any other aspect, embodiment or example described herein unless incompatible therewith.

It will be also be appreciated that, throughout the description and claims of this specification, language in the general form of "X for Y" (where Y is some action, activity or step and X is some means for carrying out that action, activity or step) encompasses means X adapted or arranged specifically, but not exclusively, to do Y.

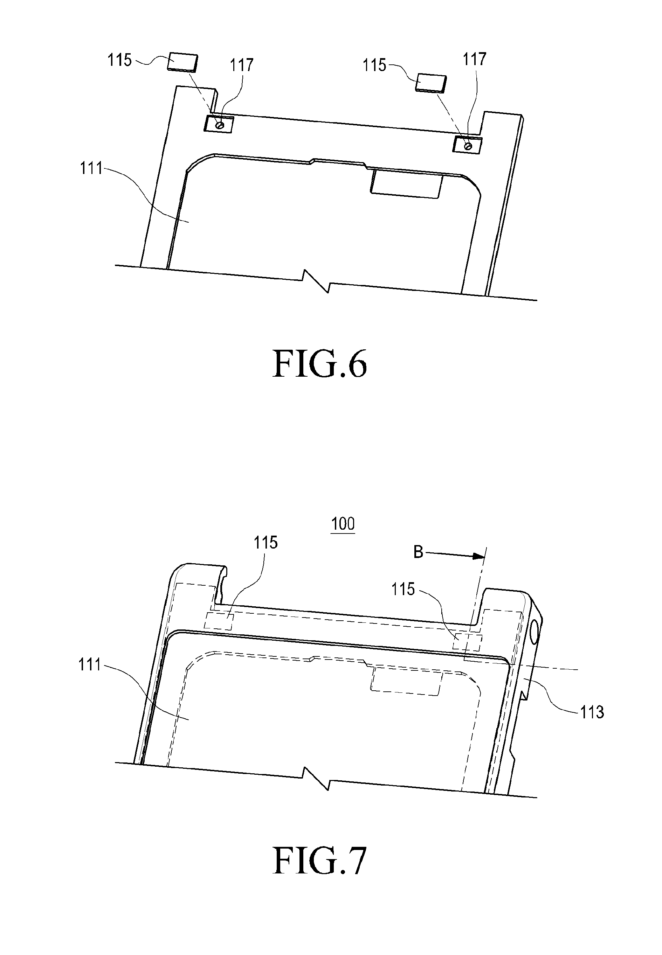

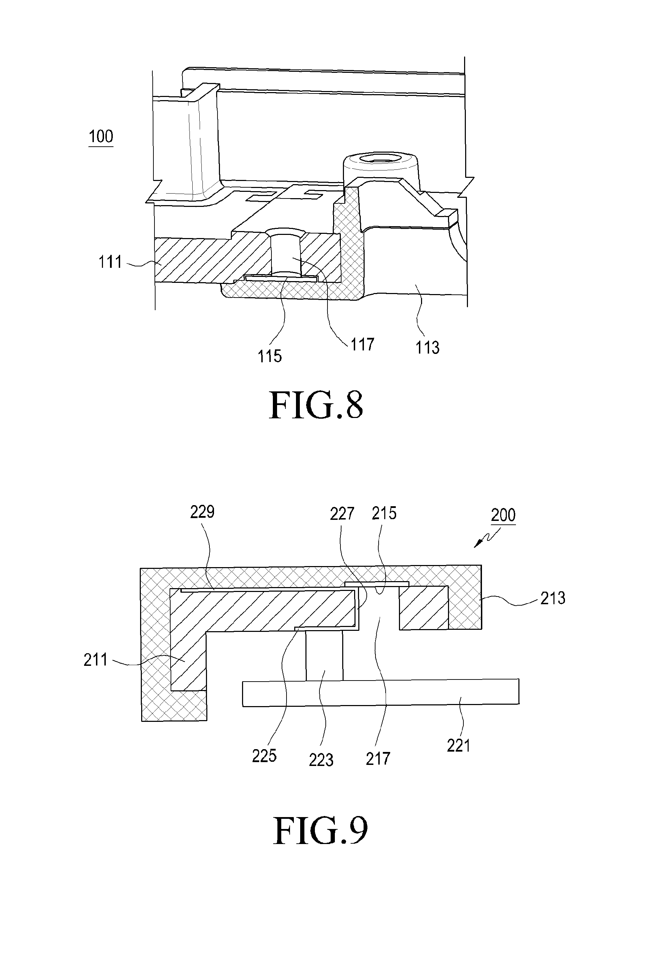

FIG. 5 is a top plan view illustrating a reinforcement member for an injection-moulded product according to an exemplary embodiment of the present invention. FIG. 6 is an exploded perspective view illustrating heat resist members being coupled to the reinforcement member depicted in FIG. 5 according to an exemplary embodiment of the present invention. FIG. 7 is a perspective view illustrating a part of an injection-moulded product according to an exemplary embodiment of the present invention. FIG. 8 is a partial cross-sectional view taken along a line indicated by arrow B of the injection-moulded product depicted in FIG. 7 according to an exemplary embodiment of the present invention.

Referring to FIGs. 5 to 8, an injection-moulded product 100 includes a reinforcement member 111, an injection-moulded member 113 and a heat-resistant member 115. In an exemplary implementation, the reinforcement member 111 is fabricated by processing a metal plate and the injection-moulded member 113 is moulded to enclose at least one surface of the reinforcement member 111, preferably the outer surface of the reinforcement member 111. Even after the injection-moulded member 113 has been completely moulded, the reinforcement member 111 may be partially exposed to the outside.

In an exemplary implementation, the reinforcement member 111 is a plate formed from a metallic material, for example, magnesium, and is configured to reinforce the structural strength of the injection-moulded product 100 within the injection-moulded product 100. In the illustrated exemplary embodiment, the injection-moulded member 113 is moulded to enclose the outer surface of the reinforcement member 111, in which the injection-moulded member 113 will practically form the external appearance of the injection-moulded product 100. The reinforcement member 111 includes at least one through-hole 117, and may include plural through-holes 117. The through-holes 117 may be formed with threads on the inner peripheral surfaces thereof to provide fastening means. In addition, as will be described below, each of the through-holes 117 may provide a surface which forms part of a printed circuit pattern along with outer and inner peripheral surfaces of the reinforcing member as illustrated in FIG. 9.

The reinforcement member 111 is introduced into the mould prior to moulding the injection-moulded member 113. As the molten resin introduced into the mould is solidified, the injection-moulded member 113 and consequently, the injection-moulded product 100 are completed such that at least one side of the reinforcement member 111, for example the outer surface of the reinforcement member 111, is enclosed by the resin. In such a case, it is preferable that the injection-moulded member 113 is moulded to at least partly enclose the inner surface of the reinforcement member 111 as well, so that the injection-moulded member 113 is formed integrally with the reinforcement member 111.

In order to prevent the molten resin from filling the through-holes 117 in the process of injection moulding, the injection-moulded product 100 is provided with heat-resistant members 115. The heat-resistant members 115 are attached to the outer surface of the reinforcement member 111 to close the through-holes 117, respectively. As such, the heat-resistant members 115 stop the molten resin infiltrating the through-holes 117 in the process of injection moulding. In an exemplary implementation, the heat-resistant members 115 may include a metal plate formed from stainless steel or a heat-resistant tape. In a case where the heat-resistant members 115 are formed from a metal plate, a double-sided tape (not illustrated) is attached surrounding each of the through-holes 117 on the outer surface of the reinforcement member 111 to attach the heat-resistant members 115 to the reinforcement member 111. In a case where the heat-resistant members 115 are formed from the heat-resistant tape, the heat-resist members 115 themselves are attached to the outer surface of the reinforcement member 111 without needing to use a separate double-sided tape.

As such, even if the through-holes 117 are formed in the reinforcement member 111, when moulding the injection-moulded product 100 having the reinforcement member 111, it is possible to stop the molten resin infiltrating the through-holes 117. Accordingly, a poor external appearance can be prevented during the process of solidifying the injection-moulded product 100. Furthermore, with the inventive injection-moulded product 100 that blocks the infiltration of molten resin by attaching the heat-resistant members 115 to the reinforcement member 111 formed with the through-holes 117, it is possible to reduce the thickness by 0.4 mm or more as compared to the injection-moulded product 10 of FIGs. 2 to 4 provided with the reinforcement member 11 that forms fastening members according to the related art as illustrated in FIG. 4.

FIG. 9 is a schematic cross-sectional view illustrating an injection-moulded product according to an exemplary embodiment of the present invention.

Referring to FIG. 9, a reinforcement member 211 is used as a part of an antenna device of an injection-moulded product 200 including an injection-moulded member 213. The reinforcement member 211 is formed with a radiation section pattern 229 on the outer surface thereof, and a contact section pattern 225 on the inner surface thereof, in which the radiation section pattern 229 is electrically connected with the contact section pattern 225 through the through-hole 217. This is enabled by using the through-hole 217 as a via hole or by forming a connection section pattern 227 on the inner wall of the through-hole 217, and connecting the opposite ends of the connection section pattern 227 to the radiation section pattern 229 and the contact section pattern 225, respectively. The reinforcement member 211 may include patterns that form a radiator, as described above, in which case it is preferable that the reinforcement member 211 is insulated from the patterns of the radiator, and may be fabricated using a dielectric material so as to implement an efficient antenna radiator. Alternatively, in order to implement an efficient antenna radiator, a dielectric material may be located between the radiation section pattern and the outer surface of the reinforcement member 211. However, in either case it is preferred that the reinforcement member 211 is fabricated from a material which is sufficiently strong to reinforce the injection-moulded product 200.

In a case where the radiation section pattern 229 and the contact section pattern 225 are formed as described above, the injection-moulded product 200 is capable of accommodating a circuit board 221 of a portable terminal. The circuit board 221 is provided so as to implement a control function and a communication function of the portable terminal, in which the circuit board 221 is provided with a contact member 223, for example, a C-clip on one side thereof that is capable of being connected to the contact section pattern 225. Therefore, the injection-moulded product 200 may provide a means for installing the antenna device while being used as a case of the portable terminal. In such a case, it is preferable that the through-hole 217 is closed by the heat-resistant member 215 on the outer surface of the reinforcement member 211.

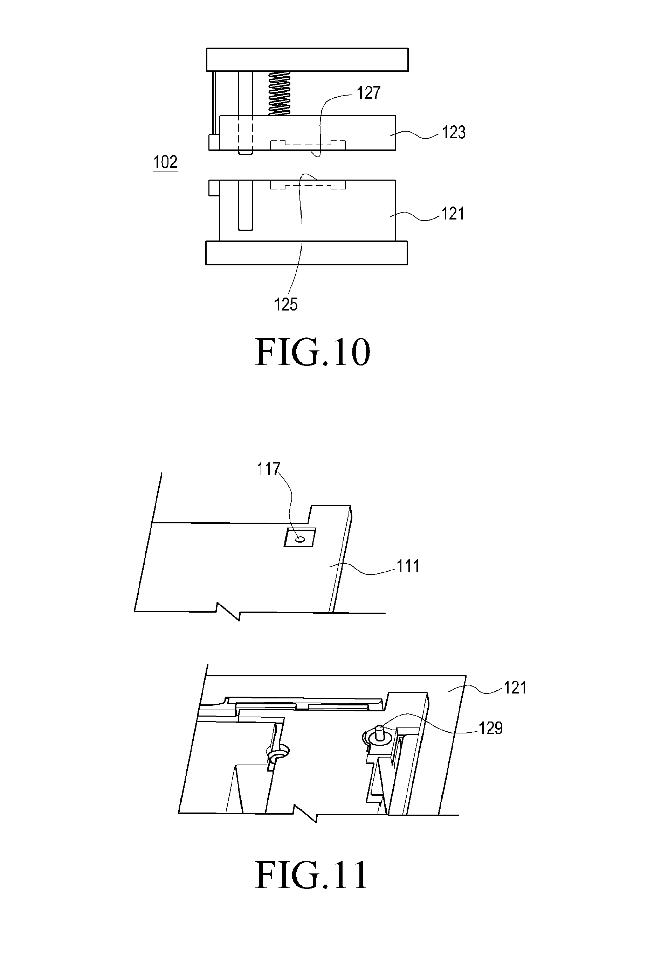

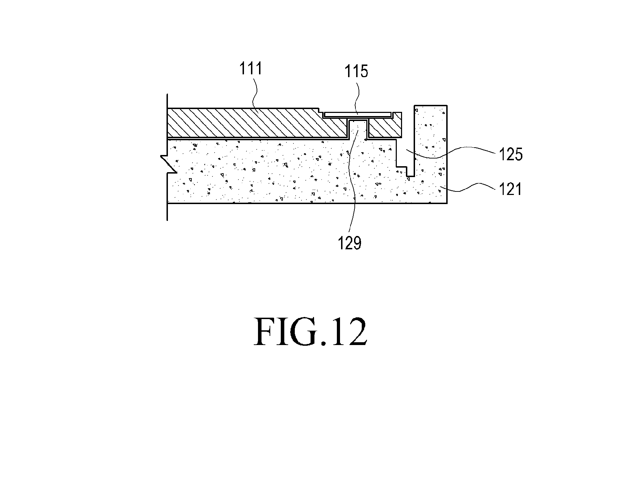

FIG. 10 is a schematic view illustrating a mould for fabricating the injection-moulded product depicted in FIGs. 5 to 9 according to an exemplary embodiment of the present invention. FIG. 11 is a view for describing a reinforcement member while being introduced into the mould depicted in FIG. 10 according to an exemplary embodiment of the present invention. FIG. 12 is a schematic cross-sectional view illustrating the reinforcement member after having been introduced into the mould depicted in FIG. 10 according to an exemplary embodiment of the present invention.

Referring to FIGs. 10 to 12, a mould 102 includes a first mould part 121, and a second mould part 123 that is shaped to mate with the first mould part 121. The first and second mould parts 121 and 123 include moulding cavities 125 and 127, respectively, and a molten resin is introduced into the moulding cavities 125 and 127 in a state where the first and second mould parts 121 and 123 are mated in such a manner that the moulding cavities 125 and 127 are opposed to each other, thereby moulding the injection-moulded member 113 or 213. In that event, the reinforcement member 111 or 211 is arranged in the first mould part 121 before the first and second mould parts 121 and 123 are mated in shape with each other.

The first mould part 121 is formed with a support stud 129 on a face opposed to the inner surface of the reinforcement member 111 or 211. When the reinforcement member 111 or 211 is arranged in the first mould part 121, the support stud 129 is positioned within the through-hole 117 or 217 to support the heat-resistant member 115 or 215 at the end of the support stud 129 which prevents the heat-resistant member 115 or 215 from being deformed into the inside of the through-hole 117 or 217 by the pressure of the molten resin in the process of introducing the molten resin into the moulding cavities 125 and 127 of the mould 102.

In forming the support stud 129, it is preferable that the diameter of the support stud 129 is smaller than the inner diameter of the through-hole 117 or 217. This is to ensure that the injection-moulded product 100 or 200 can be easily released from the mould 102 after the injection-moulded product 100 or 200 is completely moulded. In an exemplary implementation, the support stud 129 has a diameter smaller than the inner diameter of the through-hole 117 by about 0.03 mm. By being formed having this diameter, the support stud 129 prevents the deformation of the heat-resistant member 115 and 215 and allows the injection-moulded product 100 or 200 to be easily released from the mould 102 after the injection-moulded product 100 or 200 is completed.

An exemplary injection-moulded product as described above allows the thickness thereof to be reduced by about 0.4 mm as compared to the injection-moulded product of the related art by removing the need to have a separate insert member 15 which may be thicker than the reinforcement member 11 or a raised fastening member 25 while securing the same structural strength and impact resistance. Accordingly, the inventive injection-moulded product is capable of contributing to reducing a size, especially a thickness of a portable electronic device, such as a portable terminal. In addition, because the infiltration of a molten resin into the through-holes of the reinforcement member is prevented by arranging the heat-resistant members to close the through-holes, it is possible to prevent a poor moulding, such as due to contraction of the injected resin, from having an impact on the external appearance. Furthermore, because constitutional elements of an antenna, such as a radiation section pattern, can be arranged using the reinforcement member, the internal space of the case of the portable electronic device can be efficiently used. Moreover, because it is not necessary to provide a separate fastening means, such as an insert member, there is an advantage in that it is possible to simplify a manufacturing process, and hence to reduce manufacturing costs.

While the invention has been shown and described with reference to certain exemplary embodiments thereof, it will be understood by those skilled in the art that various changes in form and details may be made therein without departing from the scope of the invention as defined by the appended claims.

## Claims

1. An injection-moulded product comprising:
a reinforcement member formed with a through-hole;
a heat-resistant member attached to an outer surface of the reinforcement member to close an opening of the through-hole; and
an injection-moulded member comprising a synthetic resin that encloses at least part of the outer surface of the reinforcement member.

2. The injection-moulded product of claim 1, wherein the reinforcement member comprises a metal plate.

3. The injection-moulded product of claim 1 or 2, wherein the through-hole comprises screw threads on an inner wall thereof.

4. The injection-moulded product of any one of the preceding claims, wherein the heat-resistant member comprises a metal plate formed from a stainless steel.

5. The injection-moulded product of any one of the preceding claims, wherein the heat-resistant member is attached to an outer surface of the reinforcement member by a double-sided tape so as to close the opening of the through-hole.

6. The injection-moulded product of any one of claims 1 to 3, wherein the heat-resistant member comprises a heat-resistant tape.

7. The injection-moulded product of any one of the preceding claims, wherein the reinforcement member is at least partly formed of magnesium.

8. The injection-moulded product of any one of the preceding claims, further comprising:
a radiation section pattern formed on an outer surface of the reinforcement member; and
a contact section pattern formed on an inner surface of the reinforcement member and configured to be electrically connected with the radiation section pattern through the through-hole.

9. The injection-moulded product of claim 8, wherein the injection-moulded product is configured to accommodate a circuit board arranged to be opposed to the inner surface of reinforcement member, and to electrically connect the contact section pattern to the circuit board.

10. The injection-moulded product of claim 8 or 9, further comprising:
a connection section pattern formed on an inner wall of the through-hole, wherein opposite ends of the connection section pattern are connected with the radiation section pattern and the contact section pattern, respectively.

11. The injection-moulded product of any one of claims 8 to 10, further comprising:
a dielectric material located between the radiation section pattern and the outer surface of the reinforcement member.

12. A mould for manufacturing an injection-moulded product, the mould comprising:
a first mould part arranged to mount a reinforcement member formed with a through-hole; and
a second mould part arranged to mate with the first mould part to define a moulding cavity surrounding at least part of the reinforcement member;
wherein the first mould part comprises a support stud protruding from an inner surface of the first mould part and arranged to be positioned within a through-hole of a reinforcement member, and wherein the support stud is arranged to support a heat-resistant member such that the heat-resistant member is attached to an outer surface of the reinforcement member to close an opening of the through-hole; and
wherein the moulding cavity is arranged to receive a molten resin to form an injection-moulded member that encloses the outer surface of the reinforcement member.

13. A method of manufacturing an injection-moulded product, the method comprising:
mounting a reinforcement member upon a first mould part such that a support stud protruding from an inner surface of the first mould part is positioned within a through-hole of the reinforcement member;
supporting a heat-resistant member upon the support stud such that the heat-resistant member is attached to an outer surface of the reinforcement member to close an opening of the through-hole;
mating a second mould part with the first mould part to define a moulding cavity surrounding at least part of the reinforcement member; and
introducing a molten resin into the moulding cavity to form an injection-moulded member that encloses the outer surface of the reinforcement member.

14. The method of claim 13, wherein the support stud has a diameter smaller than an inner diameter of the through-hole of the reinforcement member.

15. The method of claim 13 or 14, wherein the support stud has a diameter smaller than an inner diameter of the through-hole of the reinforcement member by about 0.03 mm.
